# EUROPEAN PATENT SPECIFICATION

(11) **EP 0 496 165 B1**
(45) Date of publication and mention of the grant of the patent: **21.02.1996**
(21) Application number: 91311877.4
(22) Date of filing: 20.12.1991
(51) Int. Cl.: B05B 5/16, B01J 8/36, B65G 53/22, B65G 53/08

(54) **Powder paint supply device**
Vorrichtung zur Förderung von Pulverfarben
Dispositif d'alimentation de peinture en poudre

(30) Priority: 27.12.1990 JP 408025/90; 27.12.1990 JP 408053/90; 18.06.1991 JP 145802/91; 19.06.1991 JP 147378/91
(43) Date of publication of application: 29.07.1992
(60) Divisional application: 95112383.5
(73) Proprietor: MATSUO SANGYO CO., LTD., Nishi-ku Osaka-shi Osaka (JP)
(72) Inventor: Kaiju, Haruhisa, Higashinada-ku, Kobe-shi, Hyogo (JP); Yoshizaki, Akihisa, Higashisumiyoshi-ku, Osaka (JP); Yukikawa, Junichi, Ikuno-ku, Osaka (JP); Yoshida, Hitoshi, Suita-shi, Osaka (JP)
(74) Representative: Abbie, Andrew Kenneth

(56) References cited:
- EP-A- 0 098 340
- EP-A- 0 239 331
- WO-A-88/04202
- WO-A-88/04203
- WO-A-90/03848
- DE-A- 3 813 551
- FR-A- 2 024 760
- FR-A- 2 215 375
- FR-A- 2 566 875
- GB-A- 637 472
- PATENT ABSTRACTS OF JAPAN, vol. 7, no. 171 (C-178)(1316), 28th July 1983; & JP-A-58 79 536 (KAWASAKI JUKOGYO K.K.) 13-05-1983

## Description

This invention relates to a paint powder tank for a paint powder application apparatus.

Heretofore, a fluidized type paint powder tank has been used as the tank for an electrostatic paint powder application apparatus. In the case of one such paint powder tank, a porous resin plate is provided on the bottom of the tank. Compressed air is supplied into the tank through the porous resin plate to stir and dehumidify the paint powder in the tank. The density of the fluidized paint powder in the tank changes with its amount in the tank. For example, as the amount of paint powder in the tank decreases, i.e. the paint powder level in the tank lowers, the density of the paint powder decreases correspondingly.

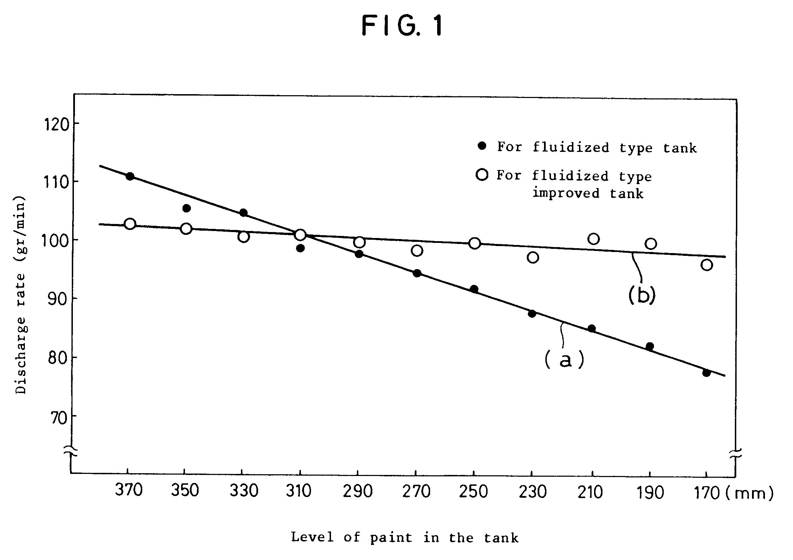

Thus, if the paint powder in the fluidized type powder tank is drawn out by a discharge device such as an injector, the discharge rate changes according to the paint powder level in the tank, as shown by line a in Fig. 1, and a uniform paint film thickness using a paint gun connected to the injector is not obtainable.

It is therefore an object of the present invention to provide a fluidized type paint powder tank in which the paint powder level in the tank has less affect on the discharge rate.

FR-A-2215375 cited in the examination of this application discloses a paint powder tank for a paint powder application apparatus, said tank having therein a fluidizing chamber for fluidizing paint powder and a second chamber, said second chamber being in communication with said fluidizing chamber for receiving fluidized paint powder therefrom and being provided with discharge means for discharging paint powder therefrom.

In this French specification the second chamber is a fluidizing chamber.

In contradistinction the present invention provides a tank as defined in the last but one paragraph characterised in that said second chamber is not a fluidizing chamber and has an opening therefrom at its upper part whereby in use fluidized paint powder received in said second chamber from said fluidizing chamber is able to settle.

In the embodiments of the invention disclosed hereinafter the fluidizing chamber is defined in said tank to one side of a partitioning wall therein, said second chamber is defined in said tank to the other side of said partitioning wall in said tank and said chambers communicate with each other at a lower part of said fluidizing chamber.

Also in these embodiments, the opening from the second chamber at the upper part thereof communicates with an upper part of said fluidizing chamber which is provided with a vent.

Preferably an intermittently operable air purge nozzle or a scraper is provided in said fluidizing chamber for discharging paint powder from said fluidizing chamber into said second chamber.

The discharge means for discharging paint powder from said second chamber may comprise a screw extending in said second chamber and rotatable for discharging paint powder from said second chamber through a discharge port thereof.

The above-mentioned screw may have an end portion which extends through said discharge port and on which a closure plate is slidably mounted and biassed against said discharge port to close the same.

In order that the invention may be well understood, some embodiments thereof, which are given merely by way of example only will now be described with reference to the accompanying drawings, in which:
Fig. 1 is a graph showing the relation between the level of the paint in the tank and the discharge rate for a fluidized type paint powder tank as previously mentioned in connection with Figure 1 and a tank embodying the invention;
Figs. 2 and 3 are respectively schematic side and plan views of one embodiment according to this invention; and
Figs. 4 to 6 are respective side views of three other embodiments according to the present invention.

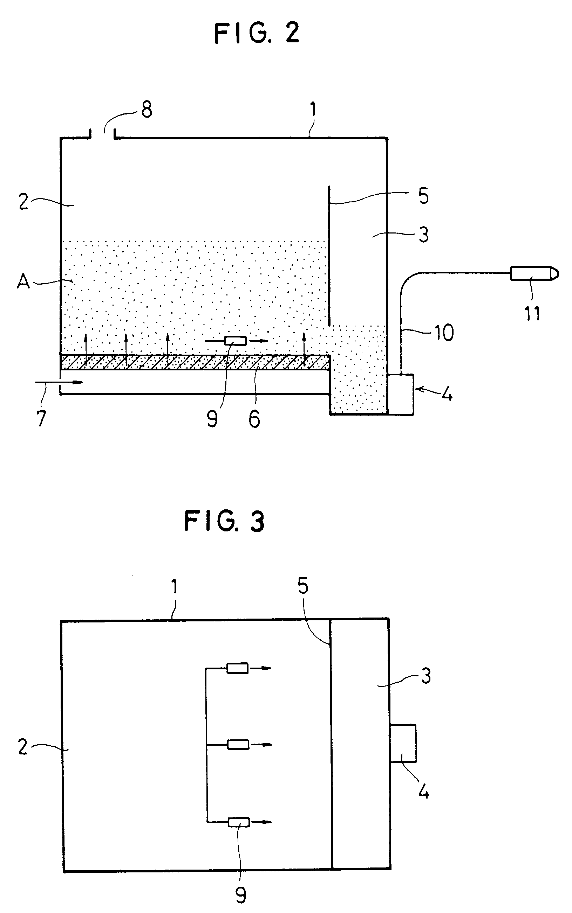

Each of the paint powder tanks 1 illustrated has a fluidizing chamber 2 for moving paint powder A as a fluid, a storage chamber 3 for holding the paint powder A drawn from the fluidizing chamber 2 in a stationary, or settled state and a discharge device 4 attached to the storage chamber 3 for discharging the paint powder A therefrom. The storage chamber 3 is not a fluidizing chamber and has an opening at its upper part, which communicates with an upper part of the fluidizing chamber 2 which is vented by air vent 8, whereby fluidized paint powder received from the fluidizing chamber 2 is able to settle. The paint powder tank shown in Figs. 2 and 3 is provided with a partitioning wall 5 on the righthand side thereof, defining the fluidizing chamber 2 on the left of the wall 5 and the storage chamber 3 on its right.

In the fluidizing chamber 2 at the lower part thereof, a porous plate 6 is provided slightly spaced apart from the bottom thereof. Compressed air 7 is fed under the porous plate 6.

The fluidizing chamber 2 and the storage chamber 3 communicate with each other at the lower part of the fluidizing chamber 2. An air purge nozzle 9 is provided in the fluidizing chamber 2 at the lower part thereof to discharge the powder paint A in the fluidizing chamber 2 into the storage chamber 3 by intermittently feeding air toward the storage chamber 3. Instead of the air purge nozzle 9, the powder paint A in the fluidizing chamber 2 may be discharged into the storage chamber 3 with a scraper which moves on and along the porous plate 6 toward the storage chamber 3.

The bottom of the storage chamber 3 is at a level lower than the bottoms of the porous plate 6 and the tank 1.

An injector as the discharge device 4 is mounted at the lower part of the storage chamber 3. A painting gun 11 is connected to the injector 4 through a powder supply hose 10.

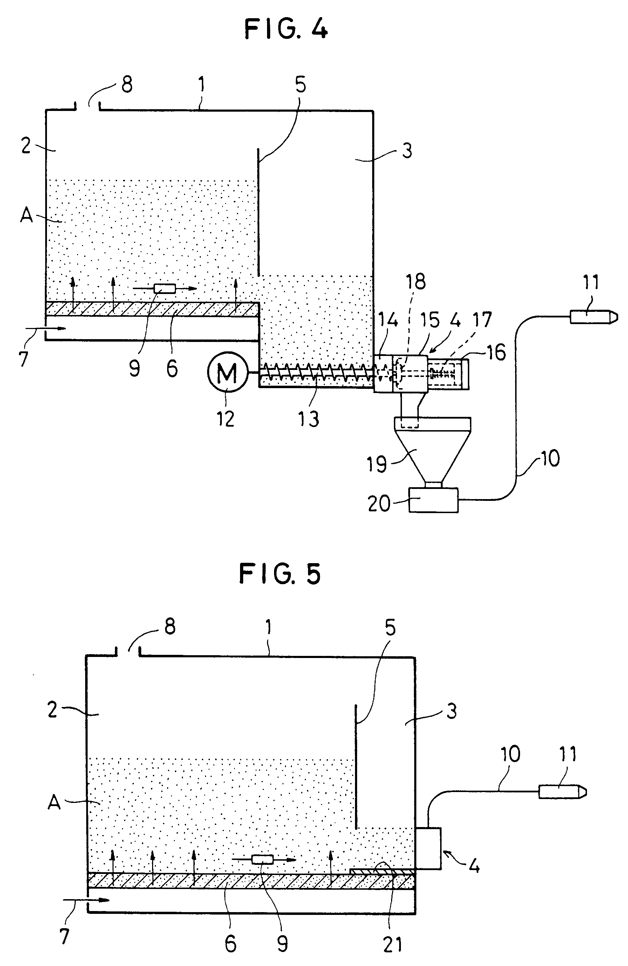

The embodiment shown in Fig. 4 has the same structure as the embodiment shown in Figs. 2 and 3 except the discharge device 4.

The discharge device 4 in this embodiment has the following structure. Namely, a screw 13 rotated by a motor 12 is mounted in the bottom of the storage chamber 3. A discharge port 14 is formed in the side of the storage chamber 3 at the front end of the screw 13. Beside the discharge port 14, there is provided a cylindrical flow straightener 15 having a drop hole in the bottom thereof. Beside the flow straightener 15, a spring housing 16 is provided. A closure plate 18 is slidably mounted on the end of the screw 13 and biassed against the discharge port 14 to close the same by a spring 17 housed in the spring housing 16.

By rotating the screw 13 with the motor 12, the powder A at the bottom of the storage chamber 3 is pushed out toward the discharge port 14. The spring 17 is compressed and the plate 18 is moved away from the port 14 by this pushing force, so that the powder is blown out through a gap between the plate 18 and the discharge port 14. The powder thus blown out hits and moves along the inner peripheral surface of the flow straightener 15 and is discharged in uniform amounts into a hopper 19 provided thereunder. An injector 20 is mounted to the bottom of the hopper 19. The powder is fed from the injector 20 into the painting gun 11 through a powder supply hose 10.

In the embodiment shown in Fig. 5, a porous plate 6 is provided over the bottom of the tank 1 so as to cover the entire bottom surface. A partitioning wall 5 is provided to divide the space over the porous plate 6 into the fluidizing chamber 2 and the storage chamber 3. A shield plate 21 is provided on the porous plate 6 at its portion located in the storage chamber 3 near its bottom to prevent the air supply from the porous plate into the storage chamber 3. Otherwise, the embodiment shown in Fig. 4 is the same in structure as the embodiment shown in Fig. 1.

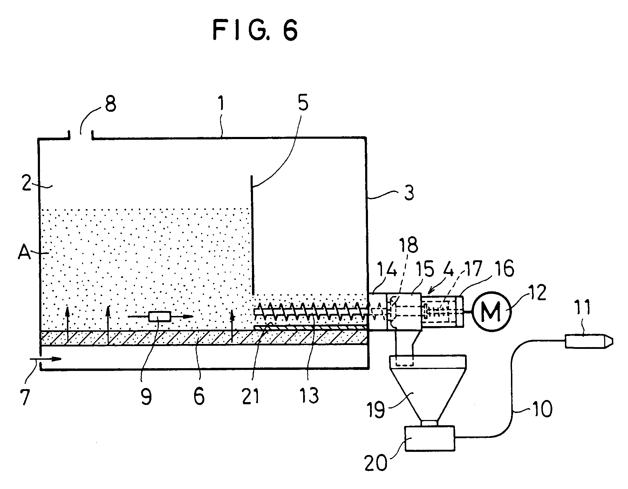

The tank 1 of the embodiment shown in Fig. 6 has the same structure as that of the embodiment shown in Fig. 5. The discharge device 4 has the same structure as that of the embodiment shown in Fig. 4. In the embodiment shown Fig. 6, the motor 12 for the screw 13 is mounted on the tip of the screw.

As shown by line b in Fig 1 a paint powder tank according to this invention can discharge the paint powder at a substantially constant rate irrespective of the paint level in the tank. Thus, the thickness of paint can be kept constant.

## Claims

1. A paint powder tank for a paint powder application apparatus, said tank having therein a fluidizing chamber (2) for fluidizing paint powder and a second chamber (3), said second chamber being in communication with said fluidizing chamber for receiving fluidized paint powder therefrom and being provided with discharge means (4) for discharging paint powder therefrom, characterised in that said second chamber (3) is not a fluidizing chamber and has an opening therefrom at its upper part whereby in use fluidized paint powder received in said second chamber from said fluidizing chamber is able to settle.

2. A tank as claimed in claim 1, wherein said fluidizing chamber (2) is defined in said tank to one side of a partitioning wall (5) therein, said second chamber (3) is defined in said tank to the other side of said partitioning wall (5) in said tank and said chambers (2, 3) communicate with each other at a lower part of said fluidizing chamber (2).

3. A tank as claimed in claim 1 or 2, wherein said opening from the second chamber at the upper part thereof communicates with an upper part of said fluidizing chamber which is provided with a vent (8).

4. A tank as claimed in claim 1, 2 or 3, wherein an intermittently operable air purge nozzle (9) or a scraper is provided in said fluidizing chamber (2) for discharging paint powder from said fluidizing chamber into said second chamber.

5. A tank as claimed in any one of claims 1 to 4, wherein said discharge means (4) for discharging paint powder from said second chamber (3) comprises a screw (13) extending in said second chamber and rotatable for discharging paint powder from said second chamber (3) through a discharge port (14) thereof.

6. A tank as claimed in claim 5, wherein said screw (13) has an end portion which extends through said discharge port (14) and on which a closure plate (18) is slidably mounted and biassed against said discharge port (14) to close the same.

## Patentansprüche

1. Behälter für Farbpulver für eine Vorrichtung zum Auftragen von Farbpulver mit einer Fließbettkammer (2) zum Verwirbeln von Farbpulver und mit einer zweiten Kammer (3), die mit der Fließbettkammer in Verbindung steht, um aus dieser Kammer verwirbeltes Farbpulver aufzunehmen und die Austragsmittel (4) zur Abgabe des Farbpulvers aus der zweiten Kammer hat,
**dadurch gekennzeichnet,**
daß die zweite Kammer (3) nicht als Fließbettkammer ausgebildet ist und oben eine Öffnung hat, so daß sich im Betrieb das aus der Fließbettkammer erhaltene und in der zweiten Kammer befindliche Farbpulver absetzen kann.

2. Behälter nach Anspruch 1,
**dadurch gekennzeichnet,**
daß die Fließbettkammer (2) im Behälter an einer Seite einer im Behälter vorgesehenen Trennwand ausgebildet ist, und daß die zweite Kammer (3) im Behälter an der anderen Seite der Trennwand (5) im Behälter vorgesehen ist, wobei die Kammern (2,3) miteinander im unteren Bereich der Fließbettkammer (2) in Verbindung stehen.

3. Behälter nach Anspruch 1 oder 2,
**dadurch gekennzeichnet,**
daß die Öffnung im oberen Bereich der zweiten Kammer mit dem oberen Bereich der Fließbettkammer in Verbindung steht, die ihrerseits eine Entlüftungsöffnung (8) hat.

4. Behälter nach Anspruch 1, 2 oder 3,
**dadurch gekennzeichnet,**
daß eine intermettierend betätigbare Düse (9) für Reinigungsluft vorgesehen ist oder daß ein Schaber in der Fließbettkammer (2) vorgesehen ist, um das Farbpulver aus der Fließbettkammer in die zweite Kammer abzugeben.

5. Behälter nach einem der Patentansprüche 1 - 4,
**dadurch gekennzeichnet,**
daß das Austragsmittel (4) für die Abgabe des Farbpulvers aus der zweiten Kammer (3) eine Schnecke (13) aufweist, die sich in der zweiten Kammer erstreckt und die drehbar ist, so daß das Farbpulver aus der zweiten Kammer (3) durch eine Abgabeöffnung (14) der zweiten Kammer abgegeben werden kann.

6. Behälter nach Anspruch 5,
**dadurch gekennzeichnet,**
daß die Schnecke (13) ein Endteil hat, das sich durch die Abgabeöffnung (14) erstreckt und an der eine Verschlußplatte (18) gleitend befestigt ist, die gegen die Abgabeöffnung (14) vorgespannt ist, um sie zu verschließen.

## Revendications

1. Réservoir de peinture en poudre pour un appareil d'application de peinture en poudre, ledit réservoir contenant une chambre de fluidisation (2) pour fluidiser la peinture en poudre et une deuxième chambre (3), ladite deuxième chambre étant en communication avec ladite chambre de fluidisation pour en recevoir de la peinture en poudre fluidisée, et étant pourvue de moyens de décharge (4) pour en décharger la poudre de peinture, caractérisé en ce que ladite deuxième chambre (3) n'est pas une chambre de fluidisation et présente une ouverture à sa partie supérieure de telle sorte que, en cours d'utilisation, la peinture en poudre fluidisée reçue dans ladite deuxième chambre en provenance de ladite chambre de fluidisation soit à même de se déposer.

2. Réservoir selon la revendication 1, dans lequel la chambre de fluidisation (2) est définie dans ledit réservoir d'un côté d'une cloison de séparation (5) située dans ce réservoir, ladite deuxième chambre (3) est définie dans ledit réservoir de l'autre côté de ladite cloison de séparation (5) dudit réservoir et lesdites chambres (2, 3) communiquent l'une avec l'autre par la partie inférieure de la chambre de fluidisation (2).

3. Réservoir selon la revendication 1 ou 2, dans lequel ladite ouverture de la deuxième chambre, située à la partie supérieure de cette chambre, communique avec une partie supérieure de ladite chambre de fluidisation qui est pourvue d'un évent (8).

4. Réservoir selon la revendication 1, 2 ou 3, dans lequel est prévue une buse de purge d'air (9) ou une racle, à fonctionnement intermittent, dans ladite chambre de fluidisation (2) pour décharger la peinture en poudre depuis ladite chambre de fluidisation dans ladite deuxième chambre.

5. Réservoir selon l'une quelconque des revendications 1 à 4, dans lequel les moyens de décharge (4) permettant de décharger la peinture en poudre depuis ladite deuxième chambre (3) comprennent une vis (13) s'étendant dans ladite deuxième chambre et apte à être amenée en rotation pour décharger la peinture en poudre de ladite deuxième chambre (3) à travers un orifice de décharge (14) de celle-ci.

6. Réservoir selon la revendication 5, dans lequel ladite vis (13) a une partie terminale qui s'étend à travers ledit orifice de décharge (14) et sur lequel une plaque de fermeture (18) est montée à glissement, cette plaque étant pressée contre ledit orifice de décharge (14) pour fermer celui-ci.
